(19) Europäisches Patentamt
European Patent Office
Office européen des brevets

(11) Veröffentlichungsnummer: **0 164 112**
**B1**

(12) # EUROPÄISCHE PATENTSCHRIFT

(45) Veröffentlichungstag der Patentschrift: **16.09.87**

(51) Int. Cl.⁴: **B 25 J 17/02,** F 16 H 55/18

(21) Anmeldenummer: **85106977.3**

(22) Anmeldetag: **05.06.85**

(54) **Handgelenk für Industrieroboter.**

(30) Priorität: **06.06.84 SE 8403043**

(43) Veröffentlichungstag der Anmeldung: **11.12.85 Patentblatt 85/50**

(45) Bekanntmachung des Hinweises auf die Patenterteilung: **16.09.87 Patentblatt 87/38**

(84) Benannte Vertragsstaaten: **DE FR GB IT**

(56) Entgegenhaltungen:
**EP - A - 0 089 129**
**GB - A - 249 340**
**SE - B - 435 030**

(73) Patentinhaber: **ASEA AB, S-721 83 Västeras (SE)**

(72) Erfinder: **Kaufmann, Herbert, Ing., Sportfiskargatan 22, S-723 48 Västeras (SE)**

(74) Vertreter: **Boecker, Joachim, Dr.-Ing., Rathenauplatz 2-8, D-6000 Frankfurt a.M. 1 (DE)**

EP 0 164 112 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Handgelenk für Industrieroboter gemäss dem Oberbegriff des Anspruches 1.

Bei den bekannten Handgelenken für Industrieroboter gibt es verschiedene Anordnungen zur Justierung des Spiels zwischen dem antreibenden und dem angetriebenen Kegelzahnrad. Eine bekannte Anordnung besteht darin, dass das Antriebsrad als fester Teil der zweiten Einheit ausgebildet ist und dass die gesamte zweite Einheit axial justierbar ist. Ein Nachteil dieser Anordnung besteht unter anderem darin, dass bei ihr die Lage der zweiten Einheit im Verhältnis zu der Antriebsvorrichtung für diese Einheit verändert wird. Eine andere Anordnung besteht darin, die zweite Einheit in zwei Teile aufzuteilen, die derart mit Gewinden versehen sind, dass sie zur axialen Justierung des die Zähne tragenden Teiles ineinander schraubbar sind. Die Teile werden nach der Justierung durch zwei Schrauben im Verhältnis zueinander festgesetzt. Diese Art der Justierung ist relativ zeitaufwendig.

Der Erfindung liegt die Aufgabe zugrunde ein Handgelenk für Industrieroboter der eingangs genannten Art zu entwickeln, bei welchem das Getriebespiel schnell und zuverlässig eingestellt werden kann, ohne dass eine der beiden Einheiten in axialer Richtung relativ zu der Antriebsvorrichtung verschoben zu werden braucht.

Zur Lösung dieser Aufgabe wird ein Handgelenk für Industrieroboter gemäss dem Oberbegriff des Anspruches 1 vorgeschlagen, welches erfindungsgemäss die im kennzeichnenden Teil des Anspruches 1 genannten Merkmale hat.

Eine vorteilhafte Ausgestaltung der Erfindung ist durch die im Anspruch 2 genannten Merkmale gekennzeichnet.

Anhand des in den Figuren gezeigten Ausführungsbeispiels soll die Erfindung näher erläutert werden. Es zeigen

Fig. 1 eine Seitenansicht eines schematisch dargestellten Industrieroboters mit einem Handgelenk gemäss der Erfindung,

Fig. 2 das Handgelenk in schematischer Darstellung von unten gesehen,

Fig. 3 das Handgelenk in schematischer Darstellung von der Seite gesehen,

Fig. 4 in vergrösserter Darstellung einen Schnitt längs der Linie 4-4 in Fig. 3,

Fig. 5 eine perpektivische Darstellung des zweiten Bauteils der zweiten scheibenförmigen Einheit,

Fig. 6 eine perspektivische Darstellung des ersten Bauteils der zweiten scheibenförmigen Einheit.

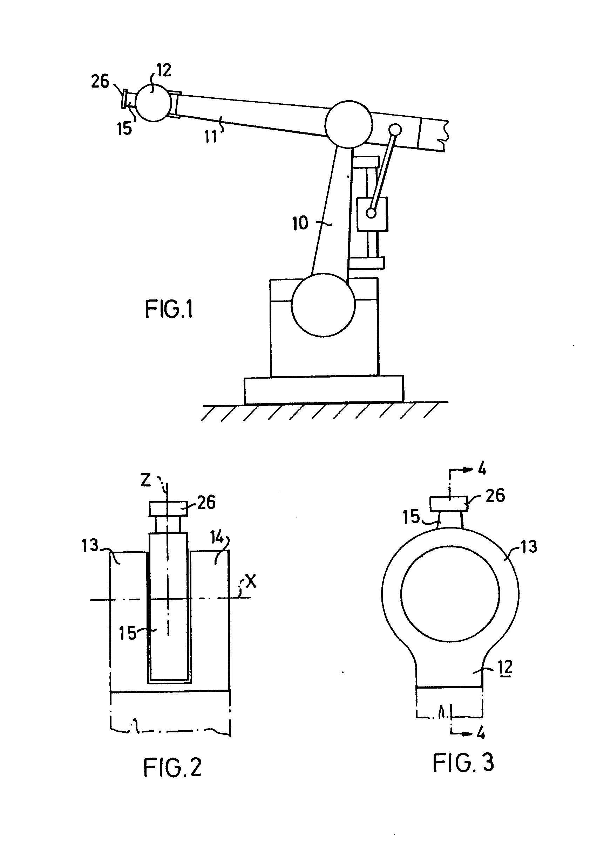

Die in Fig. 1 gezeigte Vorrichtung hat zwei verstellbare Arme 10, 11, deren Lagen mittels in bekannter Weise programmierbarer elektrischer Motoren eingestellt werden können.

Am Ende des freien Armes 11 (Unterarm) befindet sich ein fest angeordnetes Gehäuse 12, in welchem die die Erfindung kennzeichnenden Teile des Handgelenks untergebracht sind. Das Gehäuse ist in zwei Hälften 13, 14 unterteilt, zwischen denen ein Gehäuse 15 angeordnet ist, welches um eine Achse X drehbar ist und eine hülsenartige Form hat, deren Längsachse Z radial zur Drehachse X orientiert ist.

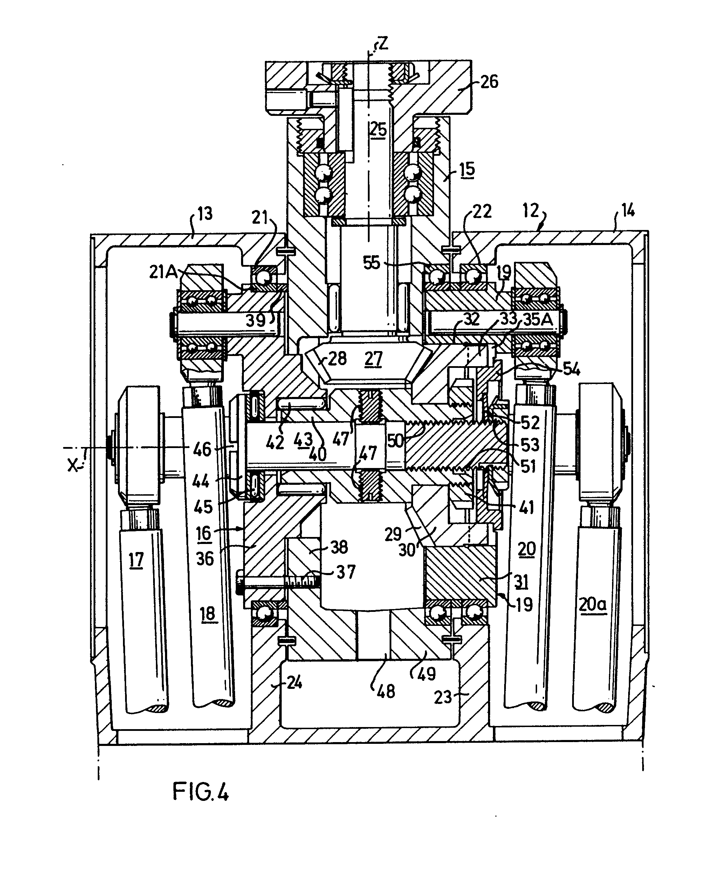

Eine erste scheibenförmige Einheit 16 (Fig. 4) trägt das Gehäuse 15 und ist um die quer verlaufende Achse X drehbar, und zwar in dem gezeigten Ausführungsbeispiel durch eine Antriebsvorrichtung, die aus zwei Antriebsstangen 17 und 18 besteht.

Eine zweite scheibenförmige Einheit 19 ist ebenfalls um die quer verlaufende Achse X drehbar, und zwar durch eine Antriebsvorrichtung, die aus zwei Antriebsstangen 20 und 20a besteht.

Die beiden scheibenförmigen Einheiten sind drehbar in der Wand 23 beziehungsweise 24 des Gehäuses mittels Kugellager 21 beziehungsweise 22 gelagert und unabhängig voneinander drehbar.

Eine Welle 25 ist in dem Gehäuse 15 drehbar um die zur X-Achse radial verlaufende Z-Achse angeordnet. An ihrem äusseren Ende ist sie mit einer Befestigungsvorrichtung 26 für einen Werkzeughalter oder eine ähnliche Arbeitseinrichtung versehen. Auf dem innen gelegenen Ende der Welle ist ein angetriebenes Kegelzahnrad 27 aufgesetzt, dessen Zähne 28 im Eingriff mit den Zähnen 29 des antreibenden Kegelzahnrades 30 stehen.

Das Kegelzahnrad 30 ist ein zweiter Bestandteil der zweiten scheibenförmigen Einheit 19, zu der auch ein ringförmiger erster Bestandteil 31 gehört.

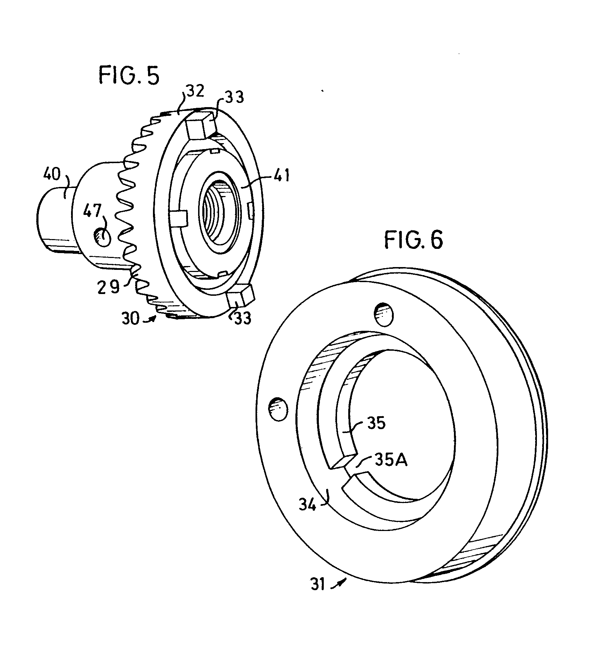

Wie Fig. 5 zeigt, hat das Kegelzahnrad 30 eine zylindrische Führungsfläche 32 und zwei Klauen 33, die in axialer Richtung aus der hinteren Stirnfläche herausragen. Das erste Bauteil 31 hat eine zylindrische Ausdrehung 34, welche die Führungsfläche 32 des Kegelzahnrades aufnimmt. An der Innenseite des ringförmigen ersten Bauteils 31 ist eine Schulter 35 vorhanden, die mit Ausnehmungen 35A versehen ist zur Aufnahme und Anlage der Klauen 33 des Handgelenkes 30. Auf diese Weise sind das erste und zweite Bauteil der zweiten scheibenförmigen Einheit 19, also das ringförmige Bauteil 31 und das Kegelzahnrad 30, derart miteinander verbunden, dass das Kegelzahnrad in axialer Richtung in verschiedenen Stellungen relativ zum ringförmigen Bauteil 31 positioniert werden kann, während das letztgenannten Bauteil durch die Kugellager 22 in einer axial festen Lage gehalten wird. Beide Bauteile 30, 31 sind durch die Klauen 33, die in axialer Richtung in den Ausnehmungen 35A verschiebbar sind, derart miteinander verbunden, dass eine gegenseitige Drehung der Bauteile nicht möglich ist.

Die erste Einheit 16 hat im wesentlichen die Form einer Scheibe 36, die mittels Schrauben 37 an der Wand 38 des Gehäuses 15 befestigt ist. Der innere Ring 21A des Lagers 21 und ein Distanzring 39 bilden ein Distanzglied und gleichzeitig ein kraftübertragendes Glied zwischen der Scheibe 36 und dem Gehäuse 15, die zusammen die erste Einheit 16 bilden.

In der gezeigten Ausführungsform ist das Kegelzahnrad 30 durch eine Hülse 40 verlängert, mit der das Kegelzahnrad nicht drehbar mittels einer Ringmutter 41 verbunden ist. Alternativ können Kegelzahnrad 30 und Hülse 40 als ein integrales Bauteil hergestellt sein.

Das von dem Kegelzahnrad abgewandte Ende der Hülse 40 ist mittels eines Nadellagers 42 drehbar in der ersten Einheit 16 gelagert. Dadurch wird eine genaue Zentrierung des Kegelzahnrades 30 erreicht, da das Kegelzahnrad mit seinen Zähnen 29 von zwei Lagern 42 und 22 getragen wird, die sich in einem relativ weiten Abstand voneinander befinden.

Um das Kegelzahnrad 30 in der gewünschten axialen Lage halten zu können und um zwecks Justierung des Spiels zwischen den Kegelzahnrädern 30 und 27 die genannte Lage schnell und einfach ändern zu können, ist eine Justierschraube 43 vorhanden, die sich durch ein zentrales Loch in der ersten Einheit 16 erstreckt und durch die Bohrung in der Hülse 40 geführt wird. Die Schraube 43 hat einen Kopf 44, der über ein axiales Nadellager 45 drehbar gegen die erste Einheit anliegt. Der Schraubenkopf hat einen Schlitz 46, so dass die Schraube mittels eines Schraubenziehers oder eines anderen Werkzeuges bequem gedreht werden kann.

Die Schraube 43 wird normalerweise im Verhältnis zur Hülse 40 festgehalten, und zwar durch ein Paar Festsetzschrauben 47 die mittels eines Schraubenziehers durch eine Öffnung 48 in der Wand 49 des Gehäuses 15 leicht zugänglich sind.

Der Endabschnitt der Schraube 43 ist mit Gewinde 50 versehen, welches mit einem entsprechenden Gewinde 51 an der Innenseite der Hülse 40 zusammenwirkt.

Wenn die Festsetzschrauben 47 gelöst werden, kann die Justierschraube 43 mittels eines Schraubenziehers gedreht werden. Das Kegelzahnrad 30 mit der Hülse 40 der zweiten Einheit werden dabei gegen Drehung blockiert durch die zweite scheibenförmige Einheit 19 und die Verbindungsstangen 20, 20a, während gleichzeitig dem Kegelzahnrad 30 und der Hülse 40 über die Gewinde 50, 51 eine axiale Verschiebung aufgezwungen wird bis das gewünschte Spiel zwischen den Kegelzahnrädern erreicht worden ist. Dann werden die Schrauben 47 wieder festgesetzt. Eine Neujustierung der axialen Lage des Kegelzahnrades 30 kann so schnell und in zuverlässiger Weise selbst durch weniger qualifiziertes Personal durchgeführt werden.

Um das axiale Spiel der Lager 21, 22 aufzunehmen, ist ein unter Spannung stehender federnder Dichtungsring 52 zwischen einer auf der Schraube 43 sitzenden Mutter 53 und einem Zwischenring 54 angeordnet, wobei der Zwischenring 54 gegen eine Schulter 35 des ringförmigen Bauteils 31 anliegt.

Zwischen dem Gehäuse 15 und der zweiten Einheit 19 ist ein Kugellager 55 angeordnet, welches zusammen mit dem Lager 22 die Montage auf der einen Seite Gehäuses 15 bildet, während das Gehäuse auf der anderen Seite von dem Lager 21 getragen wird.

**Patentansprüche**

1. Handgelenk für einen Industrieroboter mit einem am Ende des freien Arms (11) des Roboters angeordneten Gehäuse (12) mit einer ersten und einer zweiten scheibenförmigen Einheit (16, 19), die mittels eines Antriebes in eine vorbestimmte Winkellage um eine Querachse X drehbar sind, und mit einem Werkzeughalter (26) oder dergleichen, der von der ersten Einheit getragen wird und am äusseren Ende auf einer um eine zur X-Achse radial gerichteten Welle (25) drehbar angeordnet ist, wobei am anderen Ende der Welle ein Kegelzahnrad (27) befestigt ist, welches sich im Eingriff mit einem antreibenden Kegelzahnrad (30) befindet, welches von der zweiten Einheit (19) getragen wird und dessen axiale Lage zwecks Justierung des Spiels zwischen den Kegelzahnrädern einstellbar ist, dadurch gekennzeichnet, dass die zweite Einheit (19) aus zwei Hauptbauteilen besteht, von denen das erste Bauteil (31) drehbar im Gehäuse (12) angeordnet ist und an eine Antriebsvorrichtung (20, 20a) für seine Drehung angeschlossen ist, dass das zweite Bauteil (30, 40) der zweiten Einheit (19) mit Zähnen (29) für das antreibende Kegelzahnrad (30) versehen ist und relativ zum ersten Bauteil in axialer Richtung verschiebbar ist aber so mit dem ersten Bauteil verbunden ist, dass es relativ zu diesem nicht drehbar ist, dass eine Justierschraube (43) sich koaxial durch die erste und zweite Einheit erstreckt und mit ihrem Kopf (44) gegen die erste Einheit (16) anliegt, dass die Schraube (43) im Verhältnis zu dem zweiten Bauteil (30, 40) der zweiten Einheit mit Hilfe einer Festsetzeinrichtung (47) festsetzbar ist und mit diesem Bauteil (30, 40) über eine Gewindeverbindung (50, 51) derart verbunden ist, dass nach Lösung der Festsetzeinrichtung durch Drehen der Schraube die axiale Lage des zweiten Bauteils (30, 40) zwecks Justierung des Spiels zwischen den Zähnen (28, 29) der Kegelzahnräder (27, 30) verändert werden kann.

2. Handgelenk nach Anspruch 1, dadurch gekennzeichnet, dass zu dem zweiten Bauteil (30, 40) der zweiten Einheit (19) eine Hülse (40) gehört, welche die Justierschraube (43) umfasst, und dass in der Hülse zumindest eine betätigbare Festsetzschraube zur Anlage gegen die Justierschraube angeordnet ist.

**Claims**

1. Wrist for an industrial robot with a housing (12) arranged at the end of the free arm (11) of the robot, with a first and a second disc-shaped unit (16, 19) turnable about a transverse axis X into a predetermined angular position with the help of a driving means, and with a tool holder (26) or the like supported by said first unit and rotatable arranged at the outer end of a shaft (25) extending radially to the X axis, the other end of the shaft being provided with a bevel gear (27) fixed thereto and being engaged witha driving bevel gear (30) supported by said second unit (19) the axial position of the bevel gear (30) being settable for adjusting the play between the bevel gears, characterized in that the second unit (19) consists of two main components the first component (31) being rotatable arranged in the housing (12) and connected to a drive means (20, 20a) for rotating this component, that the second component (30, 40) of the second unit (19) is provided with teeth (29) for the driving bevel gear (30) and axially displaceable relative to the first component but connected with the first component such as to prevent relative rotation to the latter, that an adjusting screw (43) extends coaxially through the first and the second unit and abuts with its head (44) against the first unit (16), that the screw (43) is lockable relative to the second component (30, 40) of the second unit with the help of a locking means (47) and is connected with this component (30, 40) by screw threads (50, 51) such that after releasing the locking means the axial position of the second component (30, 40) can be varied by rotating the screw for adjusting the play between the teeth (28, 29) of the bevel gears (27, 30).

2. Wrist acording to Claim 1, characterized in that a sleeve (40) forms part of the second component (30, 40) of the second unit (19) said sleeve surrounding the adjusting screw (43), and that there is arranged in said sleeve at least one actuatable locking screw for abuting against the adjusting screw.

**Revendications**

1. Articulation pour un robot industriel avec un carter (12) disposé à une extrémité du bras libre (11) du robot, avec une première et une seconde unité (16, 19) en forme de disque, et susceptible de tourner, à l'aide d'un dispositif menant, autour d'un axe transversal X, pour se situer dans une position angulaire prédéterminée, et avec un porte-outil (26) ou similaire, qui est porté par la première unité et qui est monté à rotation à l'extrémité extérieure, sur un arbre (25) dirigé radialement par rapport à l'axe X, un pignon conique (27) étant fixé à l'autre extrémité de l'arbre, lequel pignon conique est en prise avec un pignon conique menant (30) qui est porté par la seconde unité (12) et dont la position axiale est réglable en vue d'ajuster le jeu entre les pignons coniques, caractérisée par le fait que la seconde unité (19) est constituée par deux éléments principaux dont le premier (31) est disposé dans le carter (12) de façon à pouvoir y tourner et est relié à un dispositif menant (20, 20a) pour sa rotation, que le second élément (30, 40) de la seconde unité (19) est pourvu de dents (29) pour le pignon conique menant (30) et est déplaçable en direction axiale par rapport au premier élément, mais est relié de telle façon avec ce dernier qu'il ne peut pas tourner par rapport à lui, qu'une vis d'ajustage (43) s'étend coaxialement à travers la première et la seconde unité et porte par sa tête (44) contre la première unité (16), que la vis (43) est susceptible d'être bloquée par rapport au second élément (30, 40) de la seconde unité, à l'aide d'un dispositif de blocage (47) et est reliée à cet élément (30, 40), par lintermédiaire d'une liaison à filetage (50, 51) de manière qu'après libération du dispositif de blocage, on peut modifier, par rotation de la vis, la position axiale du second élément (30, 40), en vue d'ajuster le jeu entre les dents (28, 29) des pignons coniques.

2. Articulation selon la revendication 1, caractérisée par le fait qu'au second élément (30, 40) de la seconde unité (19) appartient une douille (14) qui entoure la vis d'ajustage (43), et que dans la douille est disposée au moins une vis de blocage manoeuvrable pour son application contre la vis d'ajustage.

26
12
15
11
10
FIG.1

Z
26
13
14
X
15
FIG.2

4
26
15
13
12
4
FIG. 3

Z
26
25
15
13
21
22
12
14
21A
55
19
39
32
33
35A
28
27
54
52
42
43
40
47
50
53
X
46
47
51
44
41
45
16
29
38
20
30
17
36
37
31
18
19
20a
24
48
49
23

FIG.4

FIG. 5
32
33
40
41
47
29
30
33
FIG. 6
35
35A
34
31